Europäisches Patentamt

(19) European Patent Office     (11) Publication number: **0 250 536**

Office européen des brevets     **B1**

(12) **EUROPEAN PATENT SPECIFICATION**

(45) Date of publication of the patent specification:
28.02.90

(21) Application number: 87900316.8

(22) Date of filing: 10.12.86

(86) International application number:
PCT/SE 86/00562

(87) International publication number:
WO 87/03664 (18.06.87 Gazette 87/13)

(51)  Int. Cl. ⁵: **F 16 K 24/00, F 16 T 1/12**

(54) METHOD AND VALVE FOR CONTROLLING LIQUID DRAINING.

(30) Priority: 11.12.85 SE 8505865

(43) Date of publication of application:
07.01.88 Bulletin 88/01

(45) Publication of the grant of the patent:
28.02.90 Bulletin 90/09

(84) Designated Contracting States:
BE DE FR GB

(56) References cited:
DE-B-1 600 802
SE-B-352 299
SE-B-364 762

**Derwent's Abstract No. M 2338 C/51**

(73) Proprietor: **SRM  SVENSKA  ROTOR  MASKINER
AKTIEBOLAG
P.O. Box 15085
S-10465 Stockholm (SE)**

(72) Inventor: **OLOFSSON, Hans
Skogsvägen 17
S-141 44 Huddinge (SE)**

(74) Representative: **Waldinger, Ake
Svenska Rotor Maskiner AB Box 15085
S-104 65 Stockholm (SE)**

EP 0 250 536 B1

## Description

The present invention relates to a method for controlling the drainage of liquid from a liquid-containing pressure-gas conduit, with the aid of a valve arranged in a drainage channel as defined in the first part of claim 1 known from SE-B-364 762. and also to a drainage valve for carrying out the method.

Pressure-gas systems that contain major or minor quantities of liquid must, as a rule, be provided with liquid separators which in turn require the provision of devices for draining-off the liquid separated thereby. Large systems use float-controlled valves for this purpose. Such valves, however, are expensive and space consuming (SE-B-364 762).

The present invention is not concerned with devices of this kind, but relates more specifically to small, inexpensive devices which require only a small amount of space and which can be used, for instance, in conjunction with small compressors into which oil is injected. Compressors of this kind normally include a suitably located nozzle means which constantly drains-off gas and liquid. The smaller the compressor the more sensitive it becomes to the loss of gas through drainage. Consequently, it is normal practice to instal a valve which will open periodically so as to drain off gas and liquid intermittently over a given active period (SE-B-352 299). The active area of the nozzle or valve may not be made too small, however, since the flow of liquid separated may be quite large at times. Obviously, it is difficult to choose an optimum nozzle dimension which will satisfy at one and the same time both the requirement of economy and that of safety against overloads (Derwent's abstract No. M 2 338 C I51, SU-732 617).

The object of the present invention is to provide a solution which while overcoming the aforesaid problems will not be encumbered with the aforementioned drawbacks.

This object is achieved with the method according to the present invention, in which the liquid to be drained from, for example, a liquid separator is enabled to flow through two constrictions which are coupled in series in a drainage channel and which can be closed with the aid of a valve body in response to a pressure increase that occurs therebetween when gas instead of liquid passes through the first constriction as seen in the flow direction, this pressure increase being allowed to attenuate through a leakage passage, past the other constriction until the valve reopens and detects either the presence of liquid or of gas at the first constriction, in which latter case the valve is again closed. Thus, the valve is opened periodically at a frequency which is dependent on the negligible leakage past the second constriction. However, in distinction to the known time-controlled valve, the valve according to the present invention is closed immediately the presence of gas instead of liquid is detected in the first constriction, therewith preventing gas from being lost from the system without restricting the drainage capacity thereof.

A drainage valve for carrying out the method according to the invention has the features set forth in the characterizing clause of claim 2.

The invention will now be described in more detail with reference to the accompanying drawing, in which

Figure 1   illustrates schematically a channel for flowing fluid;

Figure 2   is a longitudinal sectional view of a valve constructed to illustrate the inventive method;

Figure 3   is a longitudinal sectional view of a valve constructed in accordance with a preferred embodiment of the invention, said view being taken on the line III-III in Figure 4;

Figure 4   is a cross-sectional view taken on the line IV-IV in Figure 3; and

Figure 5   is an enlarged view of part of the valve illustrated in Figure 3.

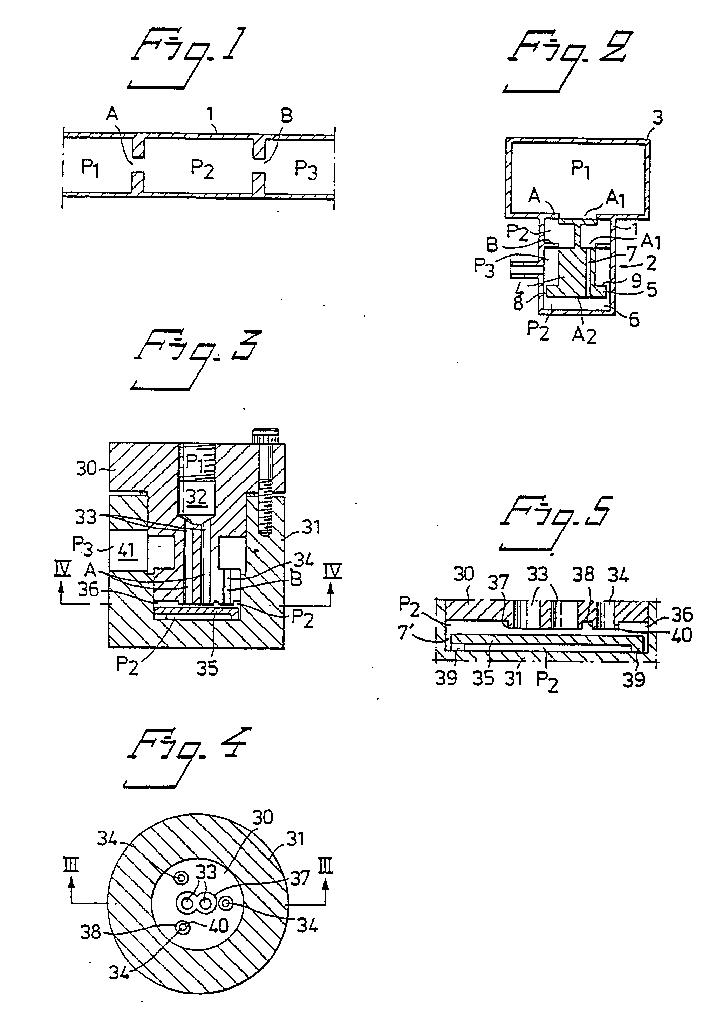

According to Figure 1, a liquid flows through a channel 1 that incorporates two identical and mutually sequential restrictions A and B, the drop in pressure across the two constrictions A and B will be the same, i.e. in the case of the indicated pressures $p_1$, $p_2$, $p_3$,

$$p_1 - p_2 = p_2 - p_3.$$

If, on the other hand, air flows through the channel, $p_1/p_2$ will equal 1.24 irrespective of $p_3$, provided that the ratio $p_1/p_3$ is greater than 2.5.

These circumstances can be utilized to drain, e.g. oil from an oil separator located at the outlet of an air compressor into which oil is injected, as illustrated schematically in Figure 2, with the aid of a theoretically suitable valve 2 connected to an oil separator 3. As with the illustrative channel of Figure 1, the valve 2 also incorporates a first constriction A and a second constriction B which is equally as large as the first constriction.

Both of the constrictions have an active surface area $A_1$. The pressure between the constrictions is designated $p_2$. The constrictions A and B can be closed by means of a common valve body 4, which presents a piston in the axial extension thereof. The piston extends into a cylindrical chamber 6 connected to the channel 1. The piston 5 has a larger active area than the constrictions A and B and is also provided with a pressure equalizing channel 7 which equalizes the pressure on both sides of the valve body 4. A leakage passage 8 extends from one of the spaces in which this pressure prevails, i.e. the pressure $p_2$, to the outlet at which pressure $p_3$ prevails, e.g. between the peripheral surface of the piston 5 and the opposing cylinder wall of the chamber 6.

When seen in the drawing, the pressure $p_1$ acts downwardly on the closed valve body 4, and the pressure $p_2$ acts with an equal force in both an upward and a downward direction. The constant outlet pressure $p_3$ acts downwardly on an annular surface 9 on the piston 5, whereas the variable pressure $p_2$ acts upwards on the undersurface of the piston 5, this undersurface having an area $A_2$. If it is assumed that the pressure $p_3$ is equal to the pressure $0.1 \times p_1$, it can readily be shown that when the ratio between the areas $A_1$ and $A_2$ lies between 0.5 and 0.7, the pressure $p_2$ will be sufficiently high to close the valve when air is present in the constriction A. When oil is present in the constriction A, the pressure $p_2$ will fall sufficiently for the pressure $p_1$ on the surface area $A_1$ and pressure $p_3$ on the annular surface 9 to overcome the pressure $p_2$ on the surface area $A_2$ and therewith hold the valve open until air begins to flow through the constriction A.

When the valve is closed by the pressure $p_2$ acting on the surface area $A_2$, leakage occurs through the passage 8, so as to gradually attenuate the pressure $p_2$. This leakage is negligible, but, however, as beforementioned, causes the valve to open at given time intervals, so as to be able to detect whether liquid or gas begins to flow through the constriction A. If gas is present in the constriction, the valve will close immediately.

As beforementioned, the valve illustrated in Figure 2 is unsuitable both with regard to its manufacture and to its method of operation. A more practicable and more suitable valve arrangement as a preferred embodiment of the invention is illustrated in Figures 3-5. The valve housing of this valve arrangement comprises an upper part 30 and a lower part 31. The inlet at which pressure $p_1$ prevails is designated 32 and the first constriction A is defined by two axial bores or channels 33. The second constriction is defined by three axial bores or channels 34 which are finer than the bores 33. The mouths of the two constrictions are adjacent one another, instead of being located one behind the other as in the valve arrangement described with reference to Figure 2. This enables the valve body to have the form of a planar valve plate or disc 35 located in an intermediate chamber 36 in which the pressure $p_2$ prevails. The mouths of respective bores 33, 34 present a thin, forwardly projecting edge 37, 38 which when ground flat will ensure that an effective seal is obtained between the mouths of the bores 33, 34 and the upper surface of the valve plate 35. In the valve arrangement illustrated in Figure 3, the pressure equalizing channel 7 of the Figure 2 embodiment has the form of a clearance 7' around the periphery of the valve plate 35. A plurality of low shoulders 39 provided on the undersurface of the plate 35 ensure that there is obtained beneath the plate 35 a clearance in which the pressure $p_2$ can propagate.

The leakage passage 8 referred to in the description of the Figure 2 embodiment has correspondence in the Figure 3 embodiment in the form of a fine groove or like recess 40 in the forwardly projecting edge 38 of the mouths of the bores 34. When the valve is closed, leakage occurs from the chamber 36 via the bores 34 to an outlet 41 at which the pressure $p_3$ prevails, as does also the drainage of oil when the valve is closed, analogously with the described performance of the Figure 1-2 embodiment.

When the valve plate 35 occupies its closed position, the plate is subjected to the downwardly acting force of the pressure $p_1$ across the total area of the bores 33 and the pressure $p_3$ across the total area of the bores 34, and also to the upwardly acting force of the pressure $p_2$ over a corresponding area on the undersurface of the valve plate 35. When the pressure $p_2$ decreases slightly as a result of the leakage that takes place through the grooves 40 or because of the presence of oil in the bores 33, the upwardly acting force is not sufficient to hold the valve plate 35 in its closed position and hence the valve will open. When air subsequently appears in the bores 33, the pressure $p_2$ in the chamber 36 will rise, therewith initiating the aforedescribed sequence.

If, for example, the total area of the bores 33 is assumed to be equal to the total area of the bores 34 and $p_1$ and $p_3$ are assumed to be equal to 8 bars and 1 bar respectively, $p_2$ will alternate between a value of 4.5 bars when oil is present in the bores 33 and a value of 6.45 bars when air is present in said bores. The dimensioning is adapted so that the upwardly acting force which has a value corresponding to $p_2 = 4.5$ bars is insufficient to hold the valve plate 35 in its closed position, whereas the pressure $p_2$ which is equal to 6.45 bars is sufficient to cause the valve plate 35 to move to its closed positon.

## Claims

1. A method for controlling the drainage of liquid fluid from a pressure gas conduit that contains gas and liquid, with the aid of a valve element located in a drainage channel, characterized by enabling the liquid to flow through two constrictions (A, B) which are connected in series in the drainage channel and which can be closed by said valve element in response to an increase in pressure occurring between the constrictions when pressure gas instead of liquid enters through a first of the two constrictions, this increase in pressure being allowed to attenuate through a leakage passage past the second of said constrictions until the valve element reopens and detects the presence of liquid or of gas in the first constriction in which latter case the valve element is again closed.

2. A drainage valve for carrying out the method of claim 1, characterized in that the valve includes a valve plate (35) and a valve housing having located therein at least one channel (33) which forms said first constriction (A) and which leads to a pressure chamber (36), and at least one further channel (34) which forms said second constriction (B) and which leads from the pressure chamber (36) to an outlet (41); in that the mouths of said channels (33, 34) in the pressure chamber (36) are located at right angles to and adjacent to one side of said valve plate (35) which incorporates a pressure equalizing channel (7') that leads to the other side of said valve plate; and in that the valve plate is arranged to close sealingly the first constriction (A) when a high pressure acts on said other side of the valve plate (35), and with a small leakage to close the second constriction (B) until the pressure increase has been reduced to a value which corresponds to the force required to open the valve.

3. A drainage valve according to claim 2, characterized in that the mouths of said channels (33, 34) in the pressure chamber (36) are of circular configuration (37, 38) and are located in mutually the same plane; and in that said leakage through the second constriction (B) is effected through a groove or like recess (40) in the cylindrical defining wall of the mouth (38) of said further channel (34).

## Patentansprüche

1. Verfahren zum Regeln des Flüssigkeitsabflusses aus einer Druckgasleitung, die Gas und Flüssigkeit enthält, mit Hilfe eines in einem Abflußkanal angeordneten Ventilelements, *dadurch gekennzeichnet*, daß die Flüssigkeit in die Lage versetzt wird, durch zwei Verengungen (A, B) zu fließen, die in Reihe innerhalb des Abflußkanals geschaltet sind und die durch das Ventilelement in Abhängigkeit von einem Anstieg des zwischen den Verengungen auftretenden Druckes geschlossen werden, wenn Druckgas anstelle Flüssigkeit durch eine erste der beiden Verengungen hindurchtritt, wobei diesem Druckanstieg erlaubt wird, sich durch einen Leckdurchlaß über die zweite der Verengungen wieder abzuschwächen, bis das Ventilelement wieder öffnet und das Vorhandensein von Flüssigkeit oder Gas in der ersten Verengung feststellt, in welch letzterem Fall das Ventilelement erneut geschlossen wird.

2. Abflußventil zur Durchführung des Verfahrens nach Anspruch 1, *dadurch gekennzeichnet*, daß das Ventil eine Ventilplatte (35) aufweist sowie ein Ventilgehäuse mit wenigstens einem darin angeordneten Kanal (33), der die erste Verengung (A) bildet und der zu einer Druckkammer (36) führt, und wenigsten einem weiteren Kanal (34), der die zweite Verengung (B) bildet und von der Druckkammer (36) zu einem Auslaß (41) führt, daß die Mündungen der Kanäle (33, 34) in die Druckkammer (36) im rechten Winkel zu und auf einer Seite der Druckplatte (35) angeordnet sind, welche einen Druckausgleichskanal (7') enthält, der zu der anderen Seite der Ventilplatte führt, und daß die Ventilplatte dazu eingerichtet ist, die erste Verengung (A) dichtend zu verschließen, wenn ein höherer Druck auf die andere Seite der Ventilplatte (35) einwirkt und mit einer kleinen Leckage die zweite Verengung (B) zu verschließen, bis der Druckanstieg auf einen Wert vermindert worden ist, welcher der zum Öffnen des Ventils erforderlichen Kraft entspricht.

3. Abflußventil nach Anspruch 2, *dadurch gekennzeichnet*, daß die Mündungen der Kanäle (33, 34) in die Druckkammer (36) Kreisform (37, 38) besitzten und gemeinsam in derselben Ebene angeordnet sind und daß das die Leckage durch die zweite Verengung (B) durch eine Nut oder eine ähnliche Ausnehmung (40) in der die Mündung (38) des weiteren Kanals (34) begrenzenden Zylinderwand bewirkt ist.

## Revendications

1. Procédé de régulation du drainage de fluides à l'état liquide d'une conduite de gaz sous pression contenant du gaz et du liquide, à l'aide d'un élément de soupape monté dans un canal de drainage, caractérisé en ce qu'il permet l'écoulement du liquide au travers de deux étranglements (A, B) reliés en série dans le canal de drainage et qui peut être fermé par ledit élément de soupape en réponse à une augmentation de pression survenant entre les étranglements lorsque du gaz sous pression au lieu de liquide pénètre par un premier des deux étranglements, cette augmentation de pression pouvant s'atténuer au travers d'un passage de fuite après le second desdits étranglements, jusqu'à ce que l'élément de soupape s'ouvre à nouveau et détecte la présence de liquide ou de gaz dans le premier étranglement, dans ce dernier cas l'élément de soupape étant refermé à nouveau.

2. Soupape de drainage pour exécuter le procédé de la revendication 1, caractérisé en ce que la soupape comprend un plateau de soupape (35) et un corps de soupape dans lequel il est agencé à l'intérieur un canal (33) au moins, formant ledit second étranglement (A) et qui conduit à une chambre de pression (36) et, un autre canal (34) au moins, formant ledit second étranglement (B) et qui conduit de la chambre de pression (36) à une sortie (41); en ce que les orifices desdits canaux (33, 34) dans la chambre de pression (36) sont disposés perpendiculairement et adjacents à un côté dudit plateau de soupape (35) qui comporte un canal d'équilibrage de pression (7') qui conduit à l'autre côté dudit plateau de soupape; et en ce que le plateau de soupape est agencé pour fermer hermétiquement le premier étranglement (A) lorsqu'une haute pression agit sur ledit autre côté du plateau de soupape (35), et avec une légère fuite pour fermer le second étranglement (B) jusqu'à ce que l'augmentation de pression ait été réduite à une valeur correspondant à la force nécessaire pour ouvrir la soupape.

3. Une soupape de drainage selon la revendication 2, caractérisée en ce que les orifices desdits canaux (33, 34) de la chambre de pression (36) ont une configuration circulaire (37, 38) et sont disposés mutuellement dans le même plan et en ce que ladite fuite par le second étranglement (B) s'effectue au travers d'une rainure ou d'un évidement analogue (40) dans la paroi cylindrique définissant l'orifice (38) dudit canal supplémentaire (34).

*Fig.1*

*Fig.2*

*Fig.3*

*Fig.5*

*Fig.4*

1